# FASCICULE DE BREVET EUROPEEN

(11) **EP 0 795 718 B1**
(45) Date de publication et mention de la délivrance du brevet: **06.07.2005**
(21) Numéro de dépôt: 97103730.4
(22) Date de dépôt: 06.03.1997
(51) Int. Cl.: F21V 15/04, F21V 19/00, B60Q 1/04, B60Q 1/26

(54) **Dispositif d'éclairage ou de signalisation pour véhicules pourvu d'un systeme amortisseur**
Beleuchtungs- oder Signal-Vorrichtung für Fahrzeuge mit einem schwingungsdämpfenden System
Vehicle lighting or signalling device comprising a vibration dampening system

(30) Priorité: 15.03.1996 FR 9603264
(43) Date de publication de la demande: 17.09.1997
(73) Titulaire: Vignal Systems, 69200 Venissieux (FR)
(72) Inventeur: Guibal, Emmanuel, 69003 Lyon (FR)
(74) Mandataire: Maureau, Philippe

(56) Documents cités:
- GB-A- 2 093 969
- US-A- 4 390 936
- US-A- 4 965 703
- US-A- 5 041 955

## Description

L'invention concerne les dispositifs d'éclairage ou de signalisation de véhicules, et à ce titre plus particulièrement les feux de signalisation de véhicules industriels.

De tels dispositifs sont constitués de façon bien connue d'un boîtier et d'un support de lampe fixé dans ce boîtier. Ce support de lampe joue aussi en général le rôle d'un réflecteur, afin de ré-émettre vers l'extérieur du dispositif la lumière émise par la lampe vers l'intérieur du dispositif. De façon simple, le support de lampe est en général fixé directement au boîtier, et le boîtier directement à la carrosserie d'un véhicule. Dans ce cas cependant, les vibrations de la carrosserie du véhicule dues au moteur et aux défauts de la route sont transmises intégralement au support de lampe par le boîtier, et ainsi la lampe elle-même est soumise à ces vibrations. Ces vibrations de la lampe provoquent en son sein des surtensions qui peuvent entraîner à leur tour la mise hors-service de la lampe. Ces vibrations sont même considérées comme la première cause de défaillance des lampes dans le cas des véhicules industriels, où l'amplitude des vibrations est particulièrement importante.

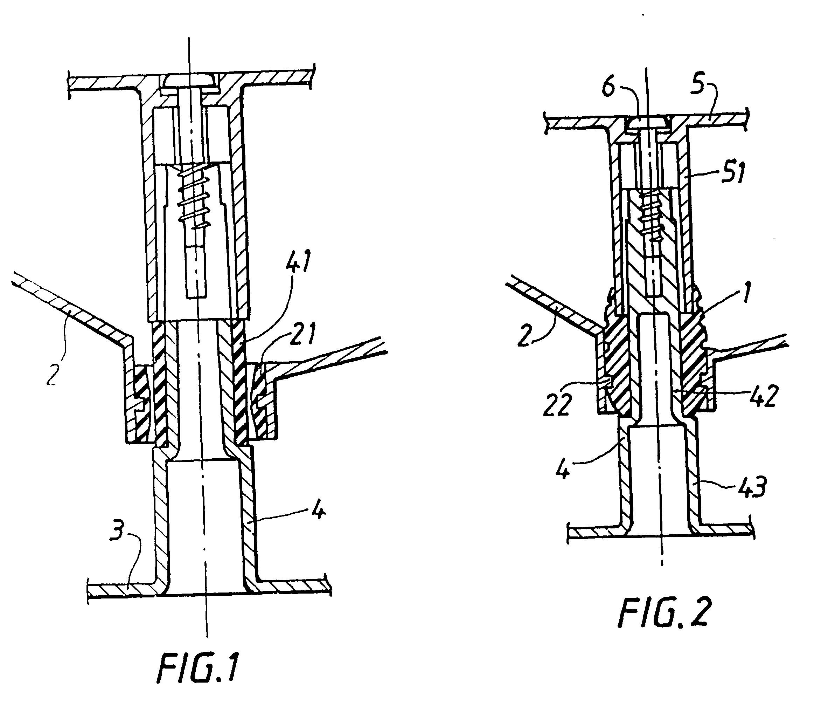

C'est pourquoi il a été proposé de monter l'ensemble dudit dispositif sur la carrosserie au moyen d'amortisseurs. Il a aussi été proposé de diminuer les vibrations du support de lampe en le fixant sur le boîtier dudit dispositif au moyen d'amortisseurs constituant un système déformable souple. La figure 1 présente un tel système. Le support de lampe 2 est monté sur une cheminée 4 du boîtier 3 par l'intermédiaire d'un amortisseur en silicone (ou tout autre matériau souple) constitué de deux manchons 21, 41, l'un 41 enfilé sur la cheminée 4, l'autre de diamètre supérieur inséré dans un trou circulaire du support de lampe 2. La cheminée 4 et son manchon 41 sont introduits dans le trou constitué par le manchon 21. De cette manière, on limite les vibrations à certaines fréquences du support de lampe 2, et par conséquent de la lampe.

De tels systèmes amortisseurs utilisant des matériaux ou des pièces souples sont par exemple décrits dans la demande de brevet GB-2 093 969 et dans les brevets US-4 390 936 et US-4 965 703.

De tels systèmes amortisseurs présentent cependant des fréquences de résonance pour lesquelles ils ont tendance à amplifier les vibrations plutôt qu'à les limiter. Ceci n'est bien sûr pas tolérable, puisqu'on retrouve à ces fréquences les inconvénients précités. Le système décrit ci-dessus a de plus l'inconvénient d'être difficile à assembler ; il est notamment nécessaire d'augmenter par élasticité le diamètre du manchon 41 de la cheminée 4 pour l'y monter.

L'invention vise à remédier à ces inconvénients de l'état de la technique. Pour ce faire, il est proposé un dispositif d'éclairage ou de signalisation pour véhicules comprenant un boîtier, une glace fermant une partie du boîtier et fixée sur le boîtier au niveau d'au moins une partie saillante du boîtier appelée cheminée, une lampe montée sur le boîtier par l'intermédiaire d'un support de lampe, ledit support de lampe étant fixé au boîtier par l'intermédiaire d'un système amortisseur, caractérisé en ce que le système amortisseur est constitué par un manchon rigide muni d'évidements et fixé autour de la cheminée.

Dans l'idée de l'invention, le matériau rigide qui constitue le manchon est choisi de façon à éliminer une fréquence de résonance de la structure mécanique que constitue ledit dispositif, ceci afin que la lampe ne subisse pas de surtensions lors de vibrations du boîtier. Selon une caractéristique de l'invention, ce matériau est du polypropylène, éventuellement du polypropylène chargé.

Ainsi, le système amortisseur diminue considérablement les vibrations du support de lampe sans provoquer de phénomène de résonance dans le domaine des fréquences de vibrations auxquelles est soumis le boîtier.

Selon un autre aspect de l'invention, il est prévu des rainures sur la partie externe du système amortisseur qui améliorent ses performances de limitations des vibrations.

Selon encore un autre aspect de l'invention, le système amortisseur présente un lamage ainsi que deux pattes d'encliquetage afin que l'assemblage du dispositif soit aisé.

D'autres caractéristiques et avantages de l'invention apparaîtront mieux dans la description suivante faite en référence aux figures annexées où :
la figure 1 représente en coupe le montage d'un support de lampe sur un boîtier de feu de signalisation selon l'art antérieur,
la figure 2 représente en coupe un montage réalisé selon l'invention,
la figure 3 présente une vue d'ensemble d'un dispositif de signalisation selon l'invention,
les figures 4a, 4b, 4c et 4d présentent des vues respectivement extérieure, en coupe, en coupe et extérieure d'un système amortisseur selon l'invention,
la figure 5 donne une courbe de surtension de la lampe pour un dispositif de l'art antérieur,
la figure 6 donne une courbe de surtension de la lampe pour un dispositif utilisant un système amortisseur conforme à l'invention.

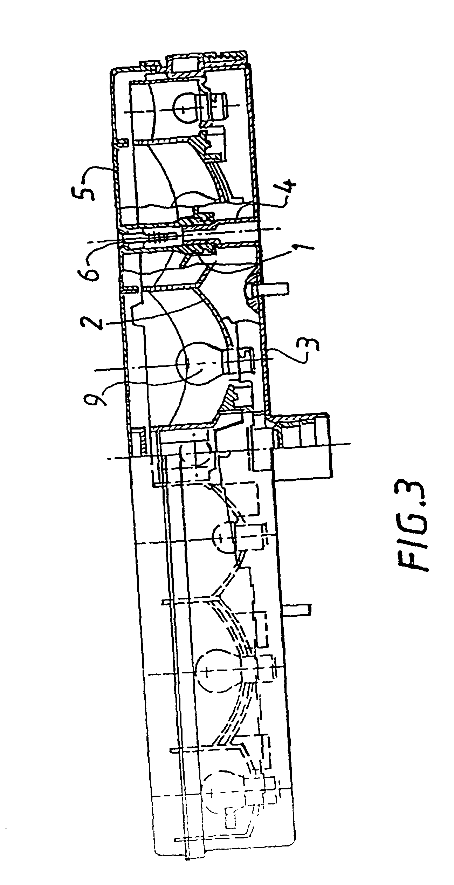

La figure 3 présente une vue d'ensemble d'un feu de signalisation de véhicule industriel. Dans la suite, on désignera par "avant" la direction dans laquelle le feu doit émettre la lumière ; sur la figure 3, cette direction est représentée vers le haut de la page. Le feu est constitué d'un boîtier 3 sur lequel est fixé un ensemble de supports de lampe 2. Cet ensemble peut être réalisé d'une pièce, constituant alors un support commun à plusieurs lampes 9, voire à toutes les lampes 9. Le support de lampe 2 a, au niveau de chaque lampe 9, une forme essentiellement parabolique et certains supports de lampe 2 sont de plus aluminés pour ainsi réaliser un réflecteur : les lampes 9 sont fixées au fond du support 2 de telle sorte que leur filament est centré sur le foyer de la parabole décrite par le support 2. Ainsi, la lumière issue de la lampe 9 est émise vers l'extérieur du feu, à travers une glace 5 montée à l'avant du boîtier 3. Le montage de la glace 5 sur le boîtier 3 est réalisé à l'aide de tiges saillantes de la paroi arrière du boîtier vers l'avant dénommées cheminées 4. La glace 5 possède des tiges 51 saillantes vers l'arrière et munies d'un trou borgne débouchant vers l'arrière, trou borgne qui coopère avec les cheminées 4 du boîtier 3. À cet effet, le diamètre extérieur des cheminées 4 est légèrement inférieur au diamètre du trou borgne. La glace 5 est maintenue en position par une vis 6.

Le support de lampe 2 est monté sur les cheminées 4 au moyen d'au moins- un système amortisseur 1 conformément à l'invention. On peut utiliser un seul système amortisseur par feu ou plusieurs, de préférence un pour chaque fixation de support de lampe 2 sur une cheminée 4.

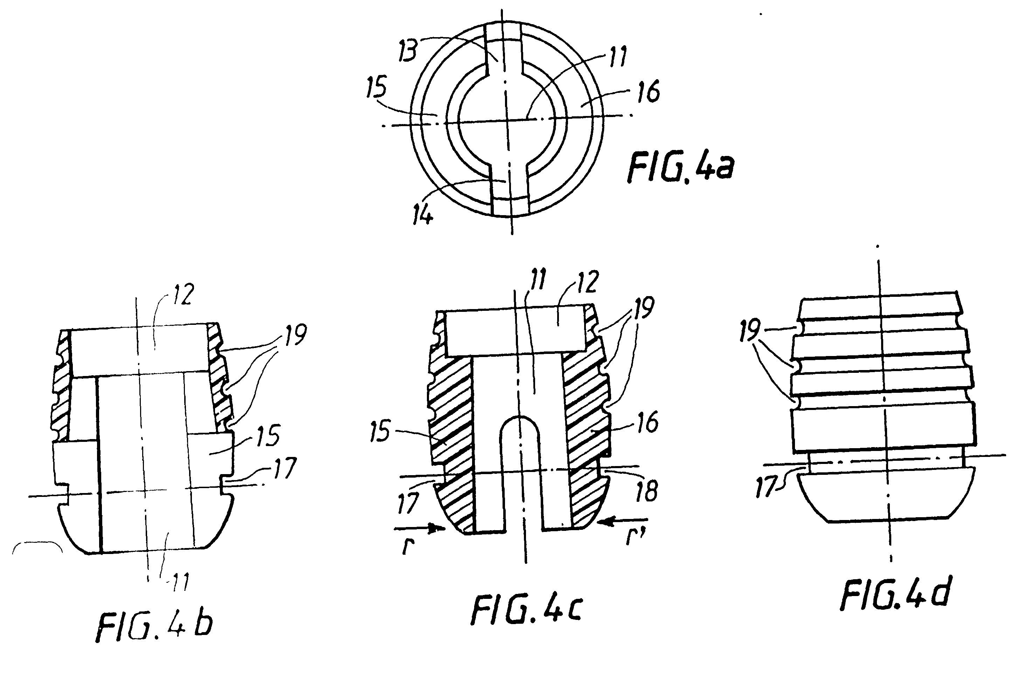

Ce système amortisseur 1 va à présent être décrit en référence aux figures 4a à 4d.

Le système amortisseur 1 est fait en un matériau rigide, ici du polypropylène. Le matériau est choisi de façon à éliminer au moins une fréquence de résonance de la structure mécanique constituée par le feu de signalisation. Le système amortisseur 1 a l'allure générale d'un manchon dont le diamètre intérieur vaut environ les deux tiers du diamètre extérieur. Le trou 11 qui constitue la partie évidée du manchon a un diamètre constant, sauf dans la partie avant où son diamètre est constant mais supérieur. On réalise ainsi dans la partie avant un lamage 12. Dans la partie avant, le système amortisseur 1 présente aussi sur sa face externe des rainures 19. Ces rainures 19 permettent d'améliorer encore l'effet d'élimination des vibrations par le système amortisseur 1. Dans la partie arrière du système amortisseur 1 sont prévus des évidements 13, 14 de telle sorte que la partie arrière du système amortisseur 1 est constituée de deux pattes 15, 16. Bien que le matériau qui consitue le système amortisseur soit rigide, grâce aux évidements 13, 14, les pattes 15, 16 peuvent se déplacer légèrement de façon élastique sous l'effet d'un effort radial r, r'. Chaque patte est parcourue sur sa face extérieure par une rainure 17, 18. On voit qu'on réalise ainsi un moyen de fixation du système amortisseur 1 par encliquetage sur le support de lampe 2.

En effet, en référence maintenant à la figure 2, le support de lampe 2 présente un trou qui possède des excroissances 22 qui coopèrent avec les rainures 17, 18 des pattes 15, 16. Toujours en référence à la figure 2, le système amortisseur forme d'autre part un manchon autour de la cheminée 4 sur une partie 42 dont le diamètre externe correspond sensiblement au diamètre interne du système amortisseur 1. De plus, le système amortisseur 1 est retenu axialement en butée, vers l'arrière par une partie 43 de la cheminée 4 de diamètre nettement supérieur aux diamètres précités, et vers l'avant par la tige 51 de la glace 5 faisant saillie vers l'arrière pour venir coopérer avec le lamage 12 prévu dans la partie avant du système amortisseur 1.

Le procédé d'assemblage du feu va maintenant être décrit, toujours en référence à la figure 2. Le système amortisseur 1 est d'abord monté sur le support de lampe 2 de manière aisée grâce aux pattes d'encliquetage 15, 16. On insère ensuite l'ensemble ainsi constitué sur la cheminée 4, jusqu'à ce que la partie arrière du système amortisseur 1 vienne en butée sur la partie de grand diamètre 43 de la cheminée 4. On introduit ensuite la glace 5 sur la cheminée 4 par l'intermédiaire des tiges 51 de la glace munies d'un trou borgne, jusqu'à ce qu'elles viennent en butée sur le lamage 12 prévu en partie avant du système amortisseur 1. Le dispositif est alors en position de fonctionnement, position maintenue à l'aide d'une vis 6. On voit qu'on permet grâce aux caractéristiques du système amortisseur 1 un assemblage très facile du feu.

Le procédé d'assemblage qui vient d'être décrit est bien sûr généralisable au cas où l'ensemble des supports de lampe 2 est fixé au boîtier 3 en plusieurs points, c'est-à-dire à l'aide de plusieurs cheminées 4, par l'intermédiaire de plusieurs système amortisseurs 1 ; l'assemblage est dans ce cas toujours aussi facile à réaliser.

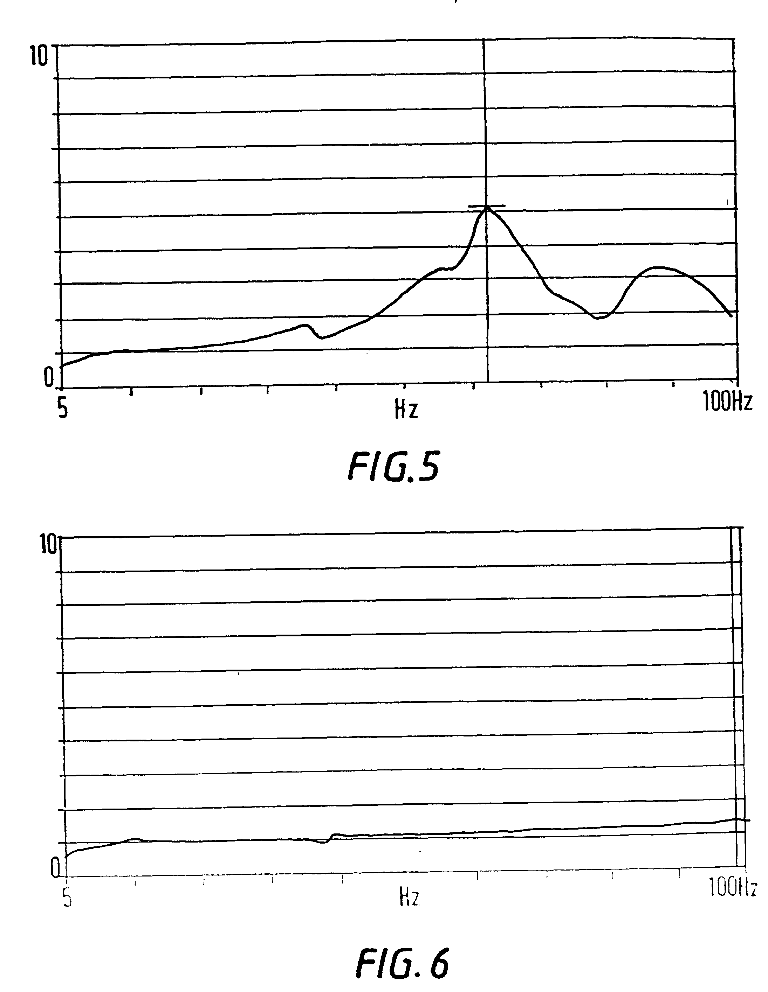

En référence à présent aux figures 5 et 6, on comprend l'intérêt de l'utilisation d'un tel système amortisseur. En effet, la courbe présentée à la figure 5 exprime le rapport des tensions effectives et nominales de la lampe en fonction de la fréquence de vibration de la carrosserie du véhicule, lorsqu'un système amortisseur de l'art antérieur est utilisé. Il apparaît clairement, comme décrit plus haut, un phénomène de résonance et une surtension très importante pour une fréquence de 65 Hz. À l'inverse, sur la courbe de la figure 6, qui exprime le rapport des tensions effectives et nominales de la lampe en fonction de la fréquence de vibration de la carrosserie du véhicule pour un dispositif utilisant au moins un système amortisseur conforme à l'invention, ces phénomènes de résonance ont complétement disparu ; on constate de plus que les lampes équipant un dispositif d'éclairage ou de signalisation selon l'invention ont une durée de vie considérablement accrue par rapport à celles équipant les dispositifs de l'art antérieur.

Le système amortisseur selon l'invention pourra bien sûr être utilisé avec d'autres moyens d'amortissement, notamment le montage de l'ensemble du dispositif d'éclairage ou de signalisation sur la carrosserie au moyen d'amortisseurs de l'art antérieur. Le système amortisseur selon l'invention sera alors avantageusement utilisé pour éviter de transmettre au support de lampe les vibrations de grande amplitude subies par le boîtier à la fréquence de résonance des amortisseurs de l'art antérieur. Le matériau dans lequel sera réalisé le système amortisseur selon l'invention sera choisi dans ce but.

D'autres formes de réalisation pourront être prévues sans pour autant sortir du cadre de l'invention.

## Revendications

1. Dispositif d'éclairage ou de signalisation pour véhicules comprenant un boîtier (3), une glace (5) fermant une partie du boîtier (3) et fixée sur le boîtier (3) au niveau d'au moins une partie saillante du boîtier (3) appelée cheminée (4), une lampe (9) montée sur le boîtier (3) par l'intermédiaire d'un support de lampe (2), ledit support de lampe (2) étant fixé au boîtier (3) par l'intermédiaire d'au moins un système amortisseur (1), **caractérisé en ce que** le système amortisseur (1) est constitué par un manchon (1) rigide muni d'évidements (13,14) et fixé autour de ladite cheminée (4).

2. Dispositif selon la revendication 1, **caractérisé en ce que** le manchon (1) en matériau rigide est muni d'évidements (13,14) pour constituer des pattes (15,16) pouvant se déplacer de façon élastique.

3. Dispositif selon la revendication 2, **caractérisé en ce que** le manchon (1) en matériau rigide a des pattes (15.16) pouvant se déplacer radialement.

4. Dispositif selon l'une de revendications précédentes, **caractérisé en ce que** le manchon (1) rigide est réalisé en polypropylène

5. Dispositif selon l'une des revendications précédentes, **caractérisé en ce que** le manchon (1) est réalisé en polypropylène chargé.

6. Dispositif selon l'une des revendications 1 à 5, **caractérisé en ce que** ladite cheminée (4) comprend une partie de diamètre supérieur au diamètre de la partie recevant le système amortisseur (1) et **en ce que** ladite partie de diamètre supérieur forme une butée dans une première direction pour le système amortisseur (1).

7. Dispositif selon l'une des revendications 1 à 6, dans lequel ladite cheminée (4) s'insère dans un trou borgne d'une partie saillante (51) de la glace (5), **caractérisé en ce que** le système amortisseur (1) possède un lamage (12) et **en ce que** ladite partie saillante (51) de la glace (5) forme une butée dans une seconde direction pour le système amortisseur (1) au niveau dudit lamage (12).

8. Dispositif selon l'une des revendications 1 à 7, dans lequel le support de lampe (2) possède un trou traversé par la cheminée (4), **caractérisé en ce que** le système amortisseur (1) est fixé au support de lampe (2) au niveau dudit trou.

9. Dispositif selon la revendication 8, **caractérisé en ce que** le système amortisseur (1) possède au moins une patte élastique (15, 16) formant moyen d'encliquetage et **en ce qu'**il est fixé au support de lampe (2) par ledit moyen d'encliquetage.

10. Dispositif selon l'une des revendications précédentes, **caractérisé en ce qu'**il est prévu des rainures sur la face externe du système amortisseur (1).

11. Dispositif selon l'une des revendications précédentes, **caractérisé en ce que** le support de lampe (2) possède au moins une partie de forme essentiellement parabolique et **en ce que** ladite partie forme un réflecteur.

12. Dispositif selon l'une des revendications précédentes, dans lequel sont montées au moins deux lampes (9), **caractérisé en ce que** le support de lampe (2) est commun à une partie ou à la totalité desdites lampes (9).

## Patentansprüche

1. Beleuchtungs- oder Signalisierungsvorrichtung für Fahrzeuge, mit einem Gehäuse (3), einem einen Bereich des Gehäuses (3) verschließenden Fenster (5), das am Gehäuse (3) in Höhe wenigstens einer vorspringenden, als Stutzen (4) bezeichneten Partie des Gehäuses (3) fixiert ist, einer Lampe (9), die am Gehäuse (3) mittels eines Lampenträgers (2) montiert ist, wobei dieser Lampenträger (2) am Gehäuse mittels wenigstens eines Puffersystems (1) fixiert ist, **dadurch gekennzeichnet, dass** das Puffersystem (1) durch ein steife Muffe (1) gebildet ist, die mit Aussparungen (13, 14) versehen ist und um diesen Stutzen (4) herum fixiert ist.

2. Vorrichtung nach Anspruch 1, **dadurch gekennzeichnet, dass** die Muffe (1) aus steifem Material mit Aussparungen (13, 14) zur Bildung von Klauen (15, 16) versehen ist, die sich elastisch verschieben können.

3. Vorrichtung nach Anspruch 2, **dadurch gekennzeichnet, dass** die Muffe (1) aus steifem Material Klauen (15, 16) besitzt, die sich radial verschieben können.

4. Vorrichtung nach einem der vorhergehenden Ansprüche, **dadurch gekennzeichnet, dass** die steife Muffe (1) aus Polypropylen besteht.

5. Vorrichtung nach einem der vorhergehenden Ansprüche, **dadurch gekennzeichnet, dass** die Muffe (1) aus verstärktem Polypropylen besteht.

6. Vorrichtung nach einem der Ansprüche 1 bis 5, **dadurch gekennzeichnet, dass** dieser Stutzen (4) eine Partie mit größerem Durchmesser gegenüber dem Durchmesser der das Puffersystem (1) aufnehmenden Partie aufweist und dass diese Partie mit größerem Durchmesser einen Anschlag in einer ersten Richtung für das Puffersystem (1) bildet.

7. Vorrichtung nach einem der Ansprüche 1 bis 6, bei der der genannte Stutzen (4) in ein Sackloch einer vorspringenden Partie (51) des Fensters (5) eingesetzt ist, **dadurch gekennzeichnet, dass** das Puffersystem (1) eine Senkung (12) besitzt, und dass die vorspringende Partie (51) des Fensters (5) einen Anschlag in eine zweite Richtung für das Puffersystem (1) in Höhe der genannten Senkung (12) besitzt.

8. Vorrichtung nach einem der Ansprüche 1 bis 7, bei der der Lampenträger (2) ein vom Stutzen (4) durchsetztes Loch besitzt, **dadurch gekennzeichnet, dass** das Puffersystem (1) am Lampenträger (2) in Höhe dieses Loches fixiert ist.

9. Vorrichtung nach Anspruch 8, **dadurch gekennzeichnet, dass** das Puffersystem (1) wenigstens eine elastische Klaue (15, 16) besitzt, die ein Verklinkungsmittel bildet, und dass es am Lampenträger (2) durch dieses Verklinkungsmittel fixiert ist.

10. Vorrichtung nach einem der vorhergehenden Ansprüche, **dadurch gekennzeichnet, dass** Nuten an der Außenseite des Puffersystems (1) vorgesehen sind.

11. Vorrichtung nach einem der vorhergehenden Ansprüche, **dadurch gekennzeichnet, dass** der Lampenträger (2) wenigstens eine im Wesentlichen parabolisch geformte Partie besitzt und dass diese Partie einen Reflektor bildet.

12. Vorrichtung nach einem der vorhergehenden Ansprüche, bei der wenigstens zwei Lampen (9) montiert sind, **dadurch gekennzeichnet, dass** der Lampenträger (2) gemeinsam für einen Teil oder für alle der genannten Lampen (9) vorgesehen ist.

## Claims

1. A lighting or signalling device for vehicles, comprising a housing (3), a lens (5) closing part of the housing (3) and fixed to the housing (3) at the level of at least one projecting part of the housing (3) known as a pillar (4), and a bulb (9) mounted on the housing (3) by means of a bulb holder (2), said bulb holder (2) being fixed to the housing (3) by means of at least one damping system (1), **characterised in that** the damping system (1) consists of a rigid sleeve (1) provided with recesses (13, 14) and fixed around said pillar (4).

2. A device according to claim 1, **characterised in that** the sleeve (1) of rigid material is provided with recesses (13, 14) to form tabs (15, 16) capable of resilient displacement.

3. A device according to claim 2, **characterised in that** the sleeve (1) of rigid material has tabs (15, 16) capable of radial displacement.

4. A device according to any one of the preceding claims, **characterised in that** the rigid sleeve (1) is made of polypropylene.

5. A device according to any one of the preceding claims, **characterised in that** the sleeve (1) is made of filled polypropylene.

6. A device according to any one of claims 1 to 5, **characterised in that** said pillar (4) comprises a portion of diameter greater than the diameter of the portion accommodating the damping system (1) and **in that** said portion of greater diameter forms an abutment in a first direction for the damping system (1).

7. A device according to any one of claims 1 to 6, in which said pillar (4) is inserted in a blind hole in a projecting part (51) of the lens (5), **characterised in that** the damping system (1) has a countersink (12) and **in that** said projecting part (51) of the lens (5) forms an abutment in a second direction for the damping system (1) at the level of said countersink (12).

8. A device according to any one of claims 1 to 7, in which the bulb holder (2) comprises a hole through which the pillar (4) passes, **characterised in that** the damping system (1) is fixed to the bulb holder (2) at the level of said hole.

9. A device according to claim 8, **characterised in that** the damping system (1) comprises at least one resilient tab (15, 16) forming a snap-fastening means and **in that** it is fixed to the bulb holder (2) by said snap-fastening means.

10. A device according to any one of the preceding claims, **characterised in that** it is provided with grooves on the outer face of the damping system (1).

11. A device according to any one of the preceding claims, **characterised in that** the bulb holder (2) has at least one part substantially parabolic in form and **in that** said part forms a reflector.

12. A device according to any one of the preceding claims, in which there are mounted at least two bulbs (9), **characterised in that** the bulb holder (2) is common to some or all of said bulbs (9).
